# EUROPEAN PATENT APPLICATION

(11) **EP 1 955 899 A1**
(43) Date of publication of application: **13.08.2008**
(21) Application number: 07002904.6
(22) Date of filing: 12.02.2007
(51) Int. Cl.: B60R 13/08, G10K 11/168

(54) **Constrained layer damping for vehicle**

(71) Applicant: Rieter Technologies AG, 8406 Winterthur (CH)
(72) Inventor: Lehmann, Dirk, 8525 Niederneuhofen (CH); Roth, Harald, 8004 Zürich (CH); Mantovani, Maurizio, 8542 Wiesendangen (CH)

(57) **Abstract**

A vehicle bottom plate (1) is integrated into a damping arrangement comprising this vehicle bottom plate (1), an under floor panel (3) and a damping layer (2) in between. The under floor panel (3) is a constraining layer, which, together with the bottom plate (1) and the damping layer (2), forms a constrained layer damper. The stiffness, the loss factor and the thickness of the different layers are adjusted in order to optimise the damping performance.

## Description

Present invention is concerned with a damping arrangement comprising a vehicle bottom plate, an under floor panel and a damping layer in between.

Modern car industry more and more provides the bottom plate of the cars with under floor panels in order to protect the aggregates and components which are mounted directly underneath the bottom plate against physical and chemical damages, such as stones and salt. These under floor panels are usually made of plastics material and may comprise reinforcing additives, such as glass fibres. Additionally these under floor panels are used to diminish the aerodynamic resistance of the vehicle and/or to manage the heat flow directly underneath the bottom plate or underneath the motor compartment and/or to reduce the noise emission and/or transmission. Unfortunately these light weight under floor panels tend to vibrate and generate undesired noise.

In order to overcome these deficiencies EP-1'S20'772 proposes to provide such an under floor panel with an additionally elastic material. This elastic material is arranged between the under floor panel and the vehicle's bottom plate and allows to combine acoustic and aerodynamic properties. In particular this configuration is acoustically behaving in accordance with a classical spring-mass system, whereby the under floor panel is behaving as the mass and the elastic material as the spring. Such spring-mass systems are well known in the art and widely used for acoustic insulations. The disclosed configuration further allows to locally compress the elastic material in order to damp vibrations of the under floor panel. Unfortunately the local compression of the elastic material reduces the damping performance of the acoustic system at the same time. It appears that this kind of under floor construction has a limited acoustic performance.

Similar disadvantages are also known from all kinds of single-layer dampers, in particular sprayable dampers, which require a rather thick deposit of damper material in order to exhibit a sufficient damping effect. This results in an undesired increase of the weight of the bottom plate and obviously causes additional assembly work and increased assembly costs.

It is also known from EP-0'077'987 to use a constrained three-layer type damper for panels of automotive bodies, in particular for a metallic floor panel. This constrained damper comprises a meltable bonding layer, a viscoelastic layer and a constraining layer laminated such that the viscoelastic layer intimately sandwiched between the bonding layer and the constraining layer. The constraining layer of this damper is formed of a resin composition comprising an uncured thermosetting resin and an inorganic filler. Unfortunately it is not possible to easily adjust and/or optimise the damping performance of this damper.

It is the secret of the effectivity of the damping mechanism of a constrained layer damper that during vibration the shear forces within the damping layer are increasing and thus additionally dissipating an important amount of energy.

In view of this technical effect it is the object of present invention to achieve a vibration damping arrangement for an under floor panel, which arrangement is lightweight and simple to manufacture, which is simple to assemble and which exhibits an advanced and easy to optimise vibration damping performance.

This object is achieved by a constrained layer damping arrangement which is integrated in an under floor panel, comprising the features of present claim 1 and in particular comprises a vehicle bottom plate, an under floor panel and a damping layer in between, whereby the under floor panel is a constraining layer, which, together with the bottom plate and the damping layer, forms a constrained layer damper, whereby the stiffness, the loss factor and the thickness of the different layers are locally adjusted in order to optimise the overall damping performance.

It is surprising for the man skilled in the art, that thickness, loss factor and stiffness of the layers are the relevant and sufficient parameters for optimising the vibration damping performance.

Further embodiments of the invention comprise the features of the dependent claims. All of these embodiments integrate the under floor panel into a constrained damping layer arrangement, which allows to optimise the vibration damping performance of the whole arrangement in view of the thickness, the loss factor and the stiffness of the different layers. This leads to a strong improvement of the damping performance for any given choice of materials and for any given specification. It is an additional advantage of this integrated vibration damping arrangement that the noise in the interior of the vehicle is further reduced.

In order to exemplify the invention reference is made to the following figures illustrating:
- Fig. 1:: a schematic and cross sectional view of a vehicle bottom plate comprising a constrained layer damping arrangement according to the invention;
- Fig. 2-6:: a schematic and cross sectional view of the damping arrangement in accordance with the invention comprising different designs;
- Fig. 7-10:: a schematic and cross sectional view of the damping arrangement in accordance with the invention comprising different designs of the damping layer;
- Fig. 11 - 14:: a schematic and cross sectional view of the damping arrangement in accordance with the invention comprising different designs for an arrangement with varying thickness.

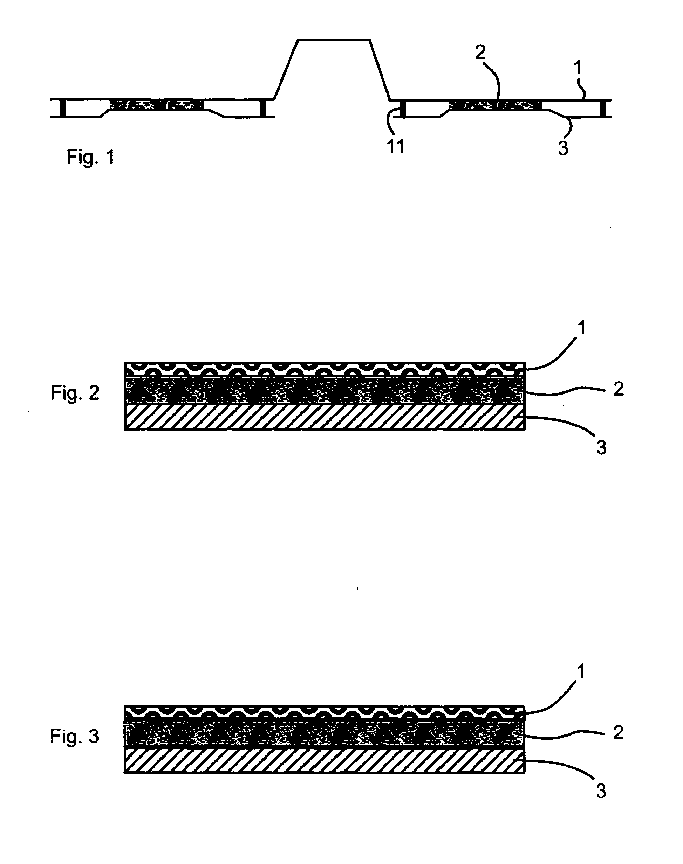

Figure 1 shows a schematic and cross sectional view of a damping arrangement in accordance to the invention. This arrangement comprises a base layer, in particular a vehicle bottom plate 1, a constraining layer, in particular an under floor panel 3 and a damping layer 2 in between. These layers are forming a constrained layer damper. The under floor panel 3 is spaced and affixed to the vehicle bottom plate 1 by fasteners 11, which do not exhibit particular compression forces to the constrained layer damper.

Fig. 2 shows a schematic and cross sectional view of a constrained damper in accordance with the invention, whereby the stiffness, the loss factor and the thickness of the different layers are adjusted in order to optimize the damping performance.

Fig. 3 represents a preferred embodiment of present invention whereby the damping material exhibits high adhesion and/or cohesion forces in order to assure an adequate surface-to-surface bond. This material is chosen from butyl, sprayable bitumen, a bitumen mastic, an expandable material or is comprising a pressure sensitive adhesive foil.

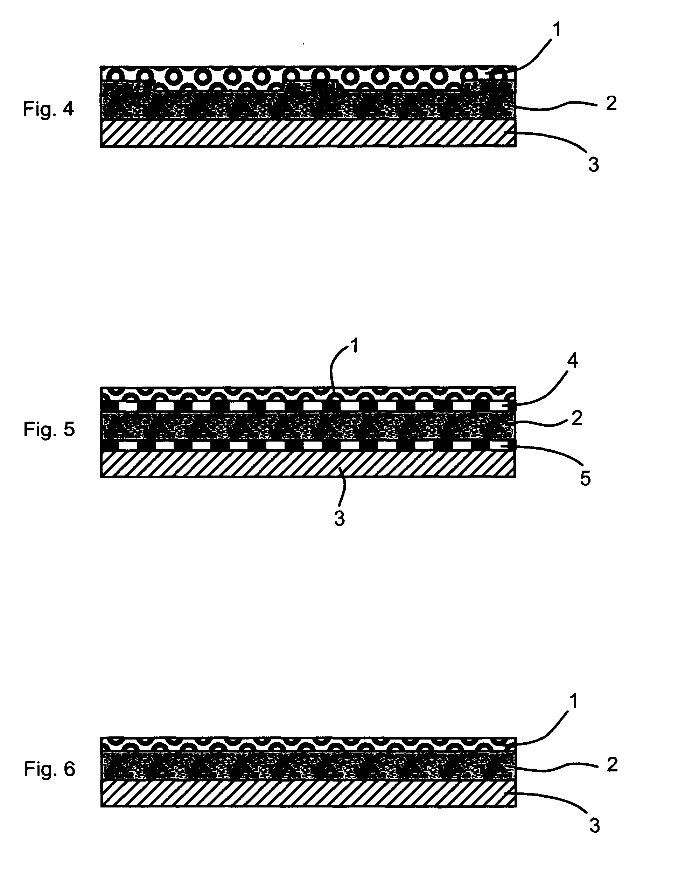

Fig. 4 shows a damping arrangement whereby the damping layer 2 comprises a locally varying thickness in order to follow the shape of the bottom plate 1. It is understood that the damping layer 2 may be assembled of patches with different thickness.

Fig. 5 shows a damping arrangement whereby the bond between the different layers is achieved by adhesives 4, 5, which have a high shear stiffness.

The damping arrangement shown in Fig. 6 comprises a constraining layer material 3, which is made of a stiff material in order to exhibit - during vibration - shear strains in the damping layer 2. The constraining layer 3 is preferably made of a fibre reinforced or non-reinforced thermoplastic fibres material and in particular of a glass fibres reinforced polypropylene material, a KEST material, a LWRT material, a JN35-material, an injection moulded PP (polypropylene) material, aluminium or a combination of these materials. KEST materials are well known in the art and described in W02001/40025, LWRT (Lightweight Reinforced Thermoplastic) is well known in the art and described in a technical information "Advanced glass-mat thermoplastic composite applications for the automotive industry" of January 2006 from Quadrant Plastic Composites, JN35 materials are described in W02004/088025 or DE102006035361.7.

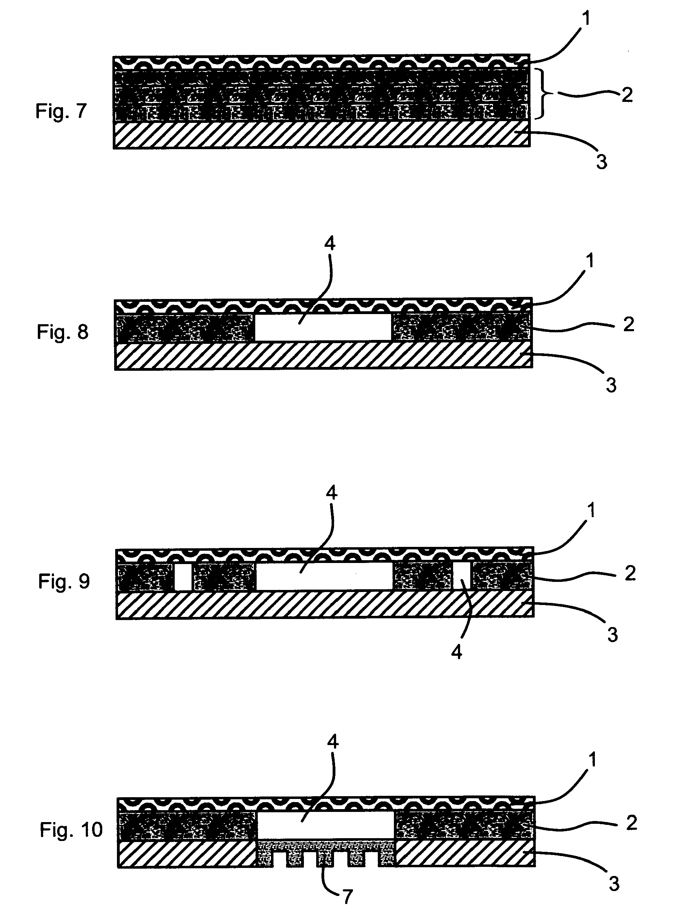

The damping arrangement shown in Fig. 7 concerns a layered construction in accordance with the invention, whereby the damping layer 2 is made of a standard bitumen, a butyl foil, a heavy layer bitumen, a bitumen mastic, a sprayable bitumen, or a combination of these materials.

Fig. 8 shows a damping arrangement whereby the under floor panel 3 is partially covered by the damping layer 2 and a space 4 is created between the under floor panel 3 and the bottom plate 1.

Fig. 9 shows a damping arrangement whereby the damping layer 2 is perforated in order to allow compression in z-direction (or an expansion of the damping material in x,y-direction) during mounting of a strip of mastic.

Fig. 10 shows a damping arrangement whereby the layer 3 is perforated or replaced by an absorber material 7, in particular by a KEST-material, a JN35-material, a LWRT-material at areas which are not covered by the damping material 2.

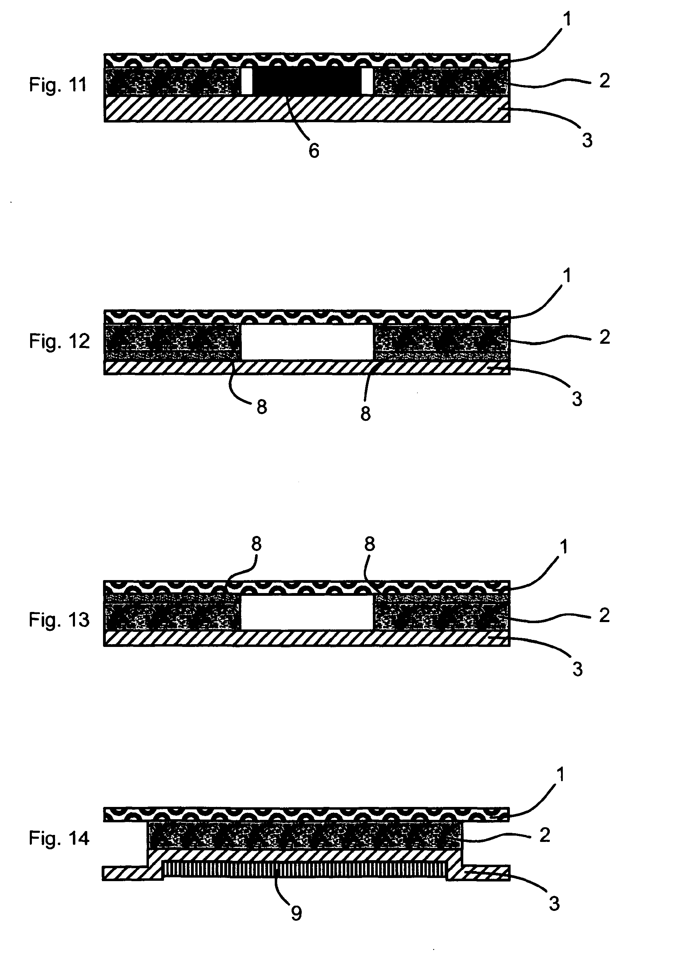

Fig. 11 shows a damping arrangement whereby the free space 4 between the bottom plate 1 and the under floor panel 3 is filled with an absorber material 6, in particular with foam, fibres material, foam chambers, ERA-material, air or similar. ERA material is well known in the art and by example is described in W02005/023594 or W02006/105933.

Fig. 12 shows a damping arrangement whereby the constraining layer 3 comprises a spacer 8 in the damped area, to assure a given distance between the under floor panel 3 and the bottom plate 1, whereby the spacer 8 is a lightweight material, e.g. a close-cell foam, or is formed by the constraining layer itself.

The damping arrangement shown in Fig. 13 comprises a damping layer 2 and a spacer 8 to assure a given distance between the bottom plate 1 and the under floor panel 3, which spacer 8 is made of a lightweight material, e.g. a close-cell foam, or is made from the bottom plate material.

Fig. 14 shows a damping arrangement whereby an insertion layer 9 is arranged on the outside of the under floor panel 3 in order to smooth out the outer shape of the under floor panel 3, whereby this insertion layer 9 is made of lightweight material, e.g. absorbers material or is made from the under floor panel material itself.

## Claims

1. Damping arrangement comprising a vehicle bottom plate (1), an under floor panel (3) and a damping layer (2) in between, **characterised in that** the under floor panel (3) is a constraining layer, which, together with the bottom plate (1) and the damping layer (2), forms a constrained layer damper, whereby the stiffness, the loss factor and the thickness of the different layers are adjusted in order to optimise the damping performance.

2. Damping arrangement in accordance with claim 1, **characterised in that** the damping material exhibits high adhesion and/or cohesion forces, and is chosen from butyl, sprayable bitumen, bitumen mastic, expandable material or is comprising a pressure sensitive adhesive foil.

3. Damping arrangement in accordance with claim 1, **characterised in that** the damping layer (2) comprises a locally varying thickness in order to follow the shape of the floor structure or is assembled of patches with different thickness.

4. Damping arrangement in accordance with claim 1, **characterised in that** the bonding between the different layers is achieved by adhesives (4, 5), which have a high shear stiffness.

5. Damping arrangement in accordance with claim 1, **characterised in that** the constraining layer (3) is made of a stiff material in order to exhibit shear strains in the damping layer (2) during vibration, whereby the **constraining layer (3) is fibre reinforced or non-reinforced thermoplastic** fibres material, and in particular a glass fibres reinforced polypropylene, a KEST-material, a LWRT-material, a JN35-material, an injection moulded PP, an Aluminium, or a combination of these.

6. Damping arrangement in accordance with claim 3, **characterised in that** the damping layer (2) is made of a standard bitumen, a butyl foil, a heavy layer bitumen, a bitumen mastic, a sprayable bitumen, or a combination of these materials forming a layered construction.

7. Damping arrangement in accordance with claim 3, **characterised in that** the space (4) between the bottom plate (1) and the under floor panel (3) is partially covered by the damping layer (2).

8. Damping arrangement in accordance with claim 3, **characterised in that** the damping layer (2) is perforated (4) in order to allow compression in z-direction, i.e. expansion of the damping material in x,y-direction, during mounting of a strip of a mastic-material.

9. Damping arrangement in accordance with claim 5, **characterised in that** at areas not covered by the damping layer (2), the under floor panel (3) is perforated or replaced by an absorber material (7), which in particular is made from a fibre reinforced or non-reinforced thermoplastic fibres material, and in particular from a KEST-material, or a JN35-material, or a LWRT-material.

10. Damping arrangement in accordance with claim 7, **characterised in that** the free space (4) between the bottom plate (1) and the under floor panel (3) is filled with an absorber material (6), in particular with foam, fibres material, ERA-material, air, or similar.

11. Damping arrangement in accordance with claim 9, **characterised in that** the constraining under floor panel (3) comprises a spacer (8) in the damped area, to assure a given distance between the bottom plate (1) and the under floor panel (3), whereby the spacer (8) is made from a lightweight material, e.g. a close-cell foam, or is formed by the constraining layer itself.

12. Damping arrangement in accordance with claim 9, **characterised in that** the damping layer (2) comprises a spacer (8) to assure a given distance between the bottom plate (1) and under floor panel (3), which spacer (8) is made of a lightweight material, e.g. a close-cell foam or is formed by the bottom plate material itself.

13. Damping arrangement in accordance with claim 9, **characterised in that** an insertion layer (9) is arranged on the outside of the under floor panel (3) in order to smooth out the outer shape of this under floor panel (3), whereby the insertion layer (9) is made of a lightweight material, e.g. absorber material, or is made by the under floor panel material itself.
